# DEMANDE DE BREVET EUROPEEN

(11) **EP 1 170 616 A1**
(43) Date de publication de la demande: **09.01.2002**
(21) Numéro de dépôt: 01401775.0
(22) Date de dépôt: 02.07.2001
(51) Int. Cl.: G02B 7/02, G02B 7/24, F16L 23/06

(54) **Dispositif de montage d'un bras porte-oculaire sur un aeronef tel qu'un giravion**

(30) Priorité: 03.07.2000 FR 0008629
(71) Demandeur: Aerospatiale Matra Missiles, 75781 Paris Cedex 16 (FR)
(72) Inventeur: Fontaine, Bernard, 91140 Villebon sur Yvette (FR)
(74) Mandataire: Poulin, Gérard

(57) **Abrégé**

Dispositif de montage d'un bras porte-oculaire sur un aéronef.

Le dispositif comprend des brides formées sur le bras porte-oculaire et sur un support lié à l'aéronef, ainsi qu'une ceinture de maintien (32) susceptible d'occuper un état de blocage, dans lequel le bras est immobilisé par rapport au support, un état de réglage, dans lequel le bras peut être déplacé entre une position d'utilisation et une position escamotée, et un état de démontage autorisant le montage et le démontage du bras porte-oculaire, sans modifier le réglage. Le changement d'état est assuré en manoeuvrant des leviers (44,46).

## Description

### Domaine technique

L'invention concerne un dispositif assurant le montage d'un bras porte-oculaire sur un support fixe lié au boîtier inférieur d'un viseur, tel que la tête de visée d'une conduite de tir, sur un aéronef.

L'invention s'applique en particulier à la voie de visualisation d'une conduite de tir équipant un giravion. Elle peut toutefois être utilisée sur tout autre type d'aéronef, sans sortir du cadre de l'invention.

### Etat de la technique

La voie de visualisation d'une conduite de tir d'hélicoptère comprend une tête de visée principalement située à l'extérieur de la cellule de l'hélicoptère. Plus précisément, la majeure partie du boîtier de la tête de visée est généralement située au dessus du toit de la cellule. Une partie inférieure du boîtier de la tête de visée, de faible encombrement, est logée sous le toit de la cellule, dans la cabine de pilotage. Cette partie inférieure forme un support fixe sur lequel est monté un bras porte-oculaire.

Le dispositif de montage du bras porte-oculaire est conçu pour permettre un déplacement de ce bras entre une position d'utilisation, dans laquelle il fait saillie vers le bas dans la cabine de pilotage et une position escamotée, dans laquelle le bras est replié vers le haut contre le toit de l'appareil. Ce dispositif est également conçu pour permettre un bloquage du bras porte oculaire soit dans sa position d'utilisation, soit dans sa position escamotée.

En outre, il est souhaitable que le bras porte-oculaire puisse être démonté, par exemple au cours d'un vol de nuit de l'hélicoptère. En effet, le pilote porte alors fréquemment des jumelles de vision nocturne qui risquent de heurter le bras et de l'endommager.

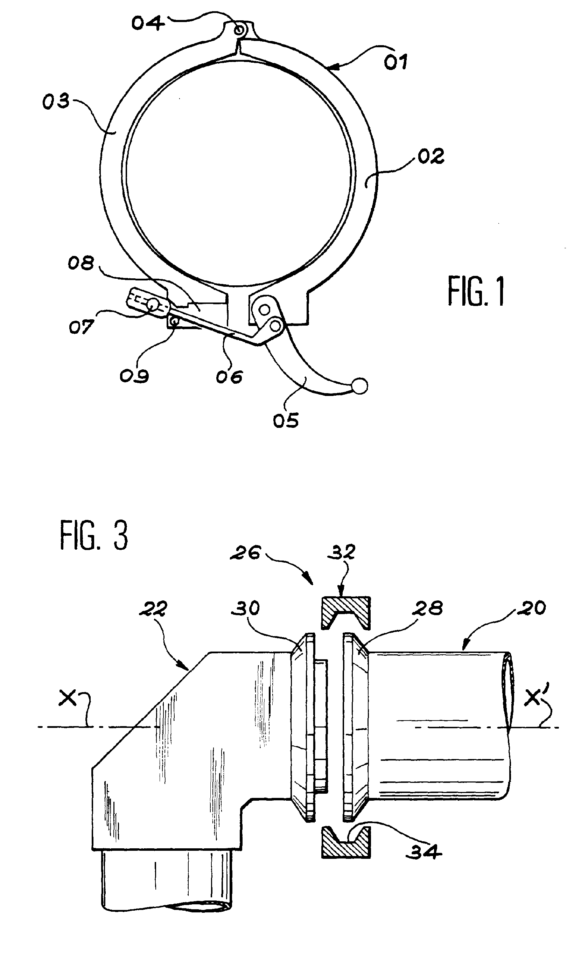

Comme l'illustre schématiquement la figure 1 des dessins annexés, les dispositifs utilisés actuellement pour monter un bras porte-oculaire sur un support fixe lié au boîtier inférieur d'un viseur de conduite de tir d'hélicoptère comprennent généralement une ceinture de maintien 01 qui encercle des brides formées respectivement sur le bras et sur le support.

La ceinture de maintien 01 est constituée de deux demi-colliers 02 et 03 dont deux extrémités adjacentes sont articulées entre elles par un pivot 04. Un mécanisme à genouillère relie les deux autres extrémités des demi-colliers 02 et 03. Ce mécanisme comprend un levier 05 articulé sur la deuxième extrémité de l'un 02 des demi-colliers, une tige filetée 06 articulée sur le levier 05 et un écrou 07 normalement vissé sur la tige filetée 06. Cette dernière est reçue dans une fente 08 formée dans la deuxième extrémité de l'autre demi-collier 03, où elle est maintenue par une broche 09.

Dans un tel dispositif, un réglage minutieux est effectué, en vissant plus ou moins l'écrou 07 sur la tige filetée 06, afin que le bras porte-oculaire soit parfaitement bloqué lorsque le levier 05 est replié contre le demi-collier 02 qui le supporte, tout en étant libre de tourner autour de l'axe de la ceinture de maintien 01 lorsque le levier 05 est basculé vers le bas. Le bras porte-oculaire peut alors être déplacé de sa position d'utilisation vers sa position de repos, ou inversement.

Dans cet agencement connu, un démontage du bras porte-oculaire ne peut être obtenu qu'en dévissant complètement l'écrou 07, afin d'ouvrir la ceinture de maintien 01. En effet, ce n'est que lorsque cette opération est réalisée que le jeu entre la ceinture et les brides formées aux extrémités du bras et du support est suffisant pour libérer le bras.

La nécessité de dévisser complètement l'écrou 07 pour démonter le bras porte-oculaire pose un certain nombre de problèmes.

Un premier problème concerne la nécessité de procéder à un nouveau réglage de la position de l'écrou sur la tige filetée lorsque le bras porte-oculaire est remis en place. Compte tenu de la précision requise pour ce réglage, cette opération peut prendre un certain temps, ce qui constitue un inconvénient notable lors d'une intervention d'urgence.

Un autre problème provient du fait que les pilotes sont fréquemment équipés de gants. L'opération de dévissage de l'écrou 07 est donc difficile à réaliser. Elle risque de conduire à la perte de l'écrou. Celui-ci peut alors chuter dans le fond de la cabine de pilotage, où il constitue alors un élément étranger susceptible d'interférer avec les nombreux équipements qui s'y trouvent, tels que les commandes de vol.

### Exposé de l'invention

L'invention a précisément pour objet un dispositif de montage d'un bras porte-oculaire, dont la conception originale permet à une personne équipée de gants de démonter le bras, lorsque cela est nécessaire, sans modifier le réglage de la ceinture de maintien dans son état de blocage et en éliminant tout risque de chute d'un corps étranger dans la cabine de pilotage.

Conformément à l'invention, ce résultat est obtenu grâce à un dispositif de montage d'un bras porte-oculaire sur un support fixe lié au boîtier inférieur d'un viseur, sur un aéronef, le dispositif comprenant des brides formées respectivement sur le bras porte-oculaire et sur le support fixe, et une ceinture de maintien apte à encercler les brides autour d'un axe commun, la ceinture de maintien intégrant des moyens de blocage aptes à occuper un état de blocage, dans lequel le bras porte-oculaire est immobilisé par rapport au support fixe et un état de réglage, dans lequel le bras porte-oculaire est apte à tourner autour dudit axe commun, par rapport au support fixe, caractérisé en ce que les moyens de blocage de la ceinture de maintien sont aussi aptes à occuper un état de démontage du bras porte-oculaire, un changement d'état entre l'état de blocage, l'état de réglage et l'état de démontage étant réalisé sans réglage.

Du fait que les moyens de blocage de la ceinture de maintien sont conçus à l'origine pour pouvoir occuper un état de blocage du bras, un état de réglage du bras et un état de démontage du bras, il devient possible de démonter le bras sans modifier le réglage permettant de maintenir le bras dans son état de blocage. De plus, ce démontage est effectué sans enlever aucune pièce, de sorte qu'il peut être effectué par une personne munie de gants sans aucun risque pour qu'un corps étranger tombe dans le fond de la cabine de pilotage.

Selon un mode de réalisation préféré de l'invention, la ceinture de maintien comprend deux demi-colliers ayant deux premières extrémités adjacentes articulées entre elles par un premier pivot et deux secondes extrémités adjacentes reliées par les moyens de blocage.

Dans ce cas, les moyens de blocage comprennent de préférence deux leviers dont chacun est articulé sur la seconde extrémité d'un demi-collier correspondant par un deuxième pivot, et une biellette articulée sur chacun des leviers par un troisième pivot.

Le deuxième pivot et le troisième pivot d'un premier des leviers sont alors avantageusement séparés par une première distance telle qu'un basculement du premier levier autour du deuxième pivot assure un passage de l'état de blocage à l'état de réglage. De façon comparable, le deuxième pivot et le troisième pivot du deuxième levier sont avantageusement séparés par une deuxième distance telle qu'un basculement du deuxième levier autour du deuxième pivot assure un passage de l'état de blocage à l'état de démontage, au moins lorsque le premier levier est également basculé. De préférence, la deuxième distance est alors supérieure à la première.

Pour permettre le réglage de la longueur circonférentielle de la ceinture de blocage dans son état de blocage, la biellette intégre, de préférence, des moyens de réglage de longueur.

Dans ce cas, les moyens de réglage de longueur comprennent avantageusement un écrou à double pas inversé, en prise sur deux tiges filetées articulées sur les leviers par les troisièmes pivots.

### Brève description des dessins

On décrira à présent, à titre d'exemple non limitatif, un mode de réalisation préféré de l'invention, en se référant aux dessins annexés, dans lesquels :
- la figure 1, déjà décrite, est une vue en coupe transversale représentant un dispositif de montage d'un bras porte-oculaire de l'art antérieur;
- la figure 2 représente schématiquement l'avant d'un hélicoptère équipé d'une tête de visée dont le bras porte-oculaire est lié au boîtier du viseur par un dispositif de montage conforme à l'invention;
- la figure 3 est une vue de côté, représentant à plus grande échelle le dispositif de montage; et
- les figures 4 à 6 sont des vues en coupe comparables à la figure 1, qui représentent le dispositif de montage conforme à l'invention respectivement dans son état de blocage, dans son état de réglage et dans son état de démontage.

### Description détaillée d'un mode de réalisation préféré de l'invention

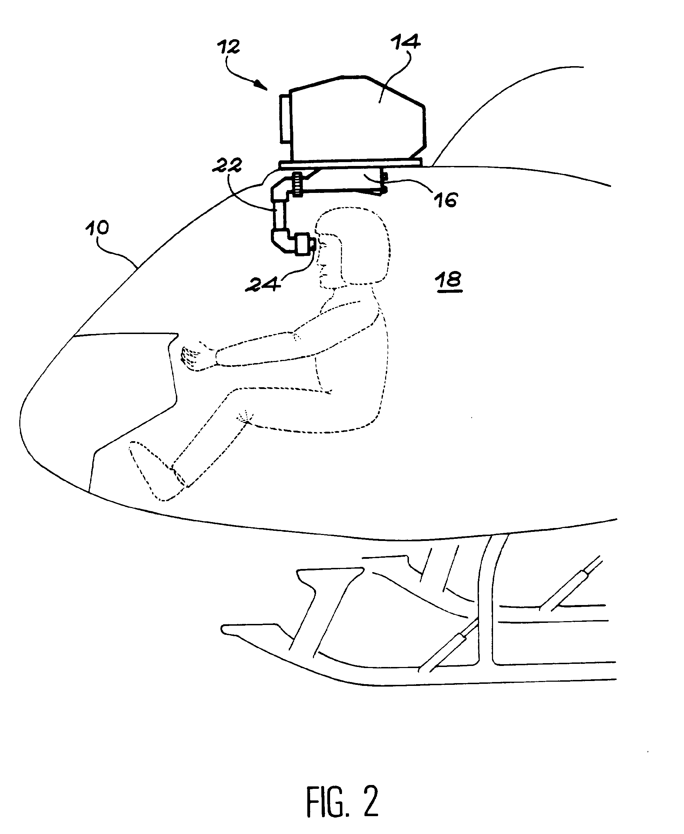

Sur la figure 2, on a représenté la partie avant d'un hélicoptère. Le toit de la cellule 10 de celui-ci supporte une tête de visée 12 d'une conduite de tir (non représentée).

La tête de visée 12 comprend une partie principale externe 14 située au dessus du toit et une partie interne 16 placée à l'intérieur de la cabine de pilotage 18.

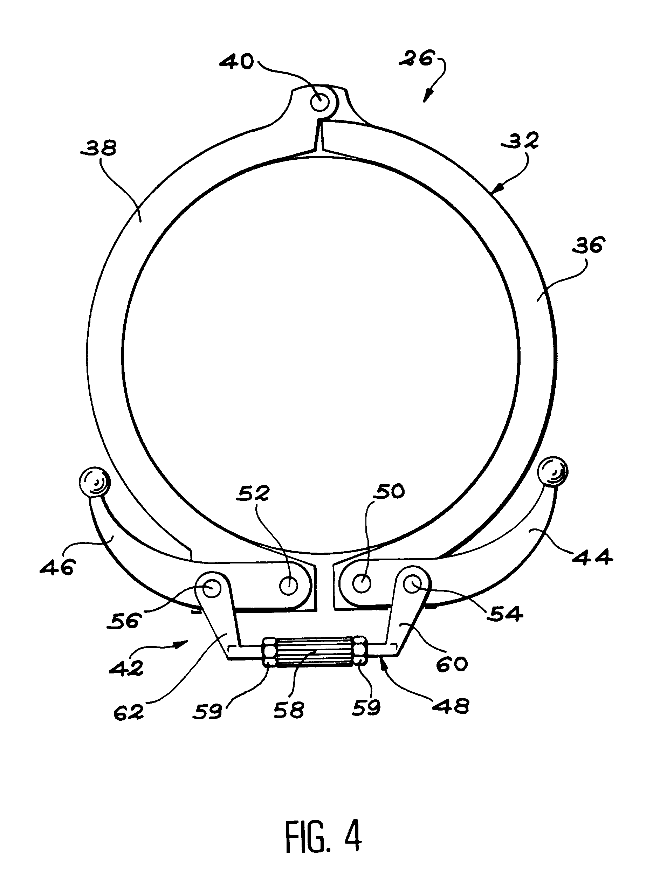

La partie interne 16 comprend principalement le boîtier inférieur du viseur de la tête de visée 12. Ce boîtier est lié à un support fixe 20 (figure 3) servant au montage d'un bras porte-oculaire 22 muni d'un oculaire 24 à son extrémité. Plus précisément, le montage du bras porte-oculaire 22 sur le support fixe 20 est assuré par un dispositif de montage 26 conforme à l'invention.

Comme l'illustre en particulier la figure 3, dans leurs zones de liaison adjacentes au dispositif de montage 26, le support fixe 20 et le bras porte-oculaire 22 comprennent l'un et l'autre une partie de forme tubulaire, dont l'axe commun X-X' est sensiblement horizontal.

Une bride 28 est formée à l'extrémité de la partie tubulaire du support fixe 20 et une bride 30 est formée à l'extrémité de la partie tubulaire du bras porte-oculaire 22. Ces brides 28 et 30 sont aptes à être reliées l'une à l'autre par une ceinture de maintien 32, pour former avec celle-ci le dispositif de montage 26.

Les faces en vis-à-vis des brides 28 et 30 présentent des formes complémentaires, de telle sorte que la partie tubulaire du bras porte-oculaire 22 est automatiquement centrée et alignée sur la partie tubulaire du support fixe 20, selon l'axe X-X', lorsque le bras 22 est relié au support 20 par les moyens de montage 26.

Les faces opposées des brides 28 et 30 présentent quand à elles des formes tronconiques, complémentaires des flancs d'une gorge 34 formée dans la ceinture de maintien 32. Plus précisément, l'agencement est tel qu'un serrage de la ceinture sur les brides permet d'immobiliser le bras porte-oculaire 22 par rapport au support fixe.

Comme l'illustre notamment la figure 4, la ceinture de maintien 32 comprend deux demi-colliers 36 et 38, semi-circulaires, dont deux premières extrémités adjacentes sont articulées entre elles par un pivot 40. Plus précisément, le pivot 40 est orienté parallèlement à l'axe X-X' et porté par le support fixe 20, au dessus des brides 28 et 30.

Les deux autres extrémités adjacentes des demi-colliers 36 et 38 sont situées en dessous des brides 28 et 30 et reliées l'une à l'autre par des moyens de blocage 42.

Dans le mode de réalisation représenté, les moyens de blocage 42 comprennent un double mécanisme à genouillère comportant un premier levier 44, un deuxième levier 46 et une biellette 48, de longueur réglable.

Le premier levier 44 est articulé sur l'extrémité inférieure du demi-collier 36 par un pivot 50 orienté parallèlement à l'axe X-X'. Le deuxième levier 46 est articulé sur l'extrémité inférieure du demi-collier 38 par un pivot 52, également orienté parallèlement à l'axe X-X'. Enfin, les extrémités de la biellette 48 sont articulées respectivement sur les leviers 44 et 46, par des pivots 54 et 56 orientés parallèlement à l'axe X-X'.

Dans l'agencement qui vient d'être décrit, la distance séparant les pivots 52 et 56 est supérieure à la distance qui sépare les pivots 50 et 54. Par conséquent, un pivotement d'un angle donné du levier 46 autour de son pivot 52 entraîne une variation de diamètre plus importante de la ceinture de maintien 32 qu'un pivotement du même angle du levier 44 autour de son pivot 50.

Dans le mode de réalisation représenté, la biellette 48 comprend un écrou 58 à double pas inversés, du type tendeur, dont les deux extrémités sont vissées respectivement sur une première tige filetée solidaire d'un bras 60, articulé sur le levier 44 par le pivot 54, et sur une deuxième tige filetée solidaire d'un bras 62, articulé sur le levier 46 par le pivot 56.

Dans une variante de réalisation non représentée, qui correspond au cas où les tolérances des pièces ne nécessitent pas de réglage, la biellette 48 est de longueur fixe et n'intégre donc pas de moyens de réglage de longueur.

La ceinture de maintien 32 conforme à l'invention peut occuper trois états différents, selon les positions occupées par les leviers 44 et 46.

Un premier état, appelé « état de blocage », est illusté sur la figure 4. Dans cet état de blocage, les deux leviers 44 et 46 sont rabattus vers le haut contre les demi-colliers 36 et 38, respectivement. La ceinture de maintien 32 enserre alors étroitement les deux demi-colliers 36 et 38 de façon telle que le bras porte-oculaire 22 est immobilisé ou bloqué par rapport au support fixe 20. Lorsque des moyens de réglage de longueur, tels que l'écrou à double pas inversés 58 sur la figure 4, sont prévus, ces moyens sont réglés une fois pour toutes lors de la première installation du bras porte-oculaire 22. La tenue du réglage est garantie par des contre-écrous 59 bien qu'une modification éventuelle du réglage reste possible par la suite, de façon exceptionnelle, celui-ci n'est pas remis en cause par les démontages et les remontages successifs.

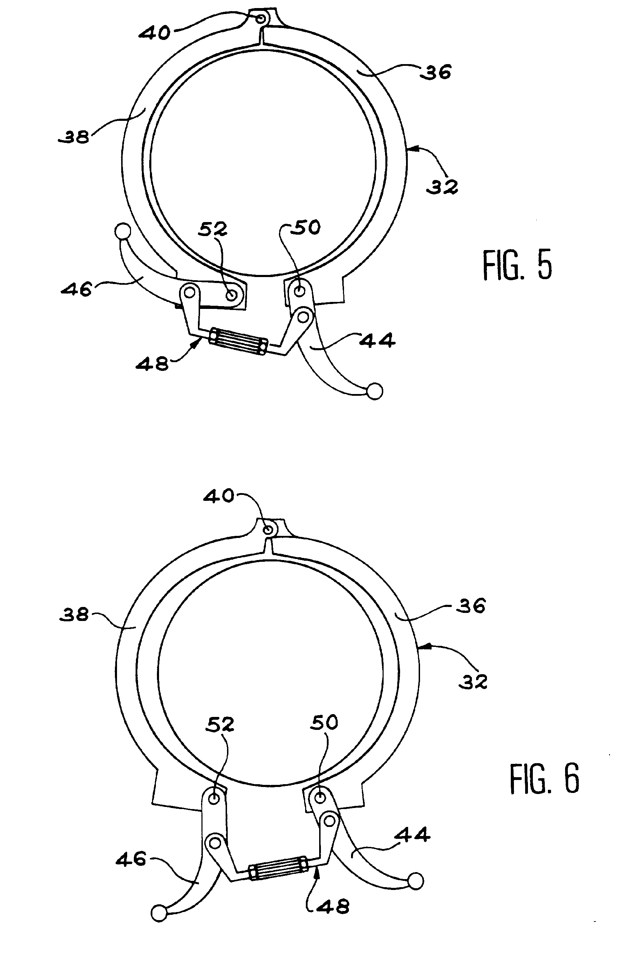

Le deuxième état, appelé « état de réglage », est illustré sur la figure 5. L'état de réglage est obtenu en basculant vers le bas le levier 44, autour du pivot 50. Il établit entre la ceinture de maintien 32 et les brides 28 et 30 un jeu suffisant pour permettre au bras porte-oculaire 22 de tourner librement autour de l'axe X-X', tout en restant suffisamment faible pour supprimer tout risque de chute accidentelle du bras.

Enfin, le troisième état, appelé « état de démontage », est illustré sur la figure 6. Dans cet état, le levier 46 est basculé vers le bas autour du pivot 52. Le levier 44 peut alors soit rester en position haute tel qu'illusté sur la figure 4, soit être également basculé vers le bas autour du pivot 50, comme on l'a représenté sur la figure 6. Le diamètre intérieur de la ceinture de maintien 32 augmente alors de façon suffisante pour que le bras puisse être démonté ou, au contraire, remonté. Cette opération est réalisée sans que le réglage de longueur de la biellette 48 soit changé. Comme on l'a indiqué précédemment, cela permet même d'utiliser une biellette dépourvue de moyens de réglage de longueur, lorsque les tolérances le permettent.

Bien entendu, l'invention n'est pas limitée au mode de réalisation qui vient d'être décrit à titre d'exemple. Ainsi, comme on l'a déjà indiqué, la biellette 48 de longueur réglable peut être remplacée par une biellette rigide et de longueur constante. De façon plus générale, les moyens de blocage 42 peuvent être constitués par tout mécanisme apte à être commuté entre trois états prédéterminés correspondant aux états de blocage, de réglage et de démontage définis précédemment, en manoeuvrant un ou plusieurs organes de type leviers, sans qu'aucun réglage soit nécessaire.

## Revendications

1. Dispositif de montage d'un bras porte-oculaire (22) sur un support fixe (20) lié au boîtier inférieur d'un viseur, sur un aéronef, le dispositif comprenant des brides (28,30) formées respectivement sur le bras porte-oculaire et sur le support fixe, et une ceinture de maintien (32) apte à encercler les brides autour d'un axe commun, la ceinture de maintien (32) intégrant des moyens de blocage (42) aptes à occuper un état de blocage, dans lequel le bras porte-oculaire est immobilisé par rapport au support fixe et un état de réglage, dans lequel le bras porte-oculaire est apte à tourner autour dudit axe commun, par rapport au support fixe, **caractérisé en ce que** les moyens de blocage (42) de la ceinture de maintien sont aussi aptes à occuper un état de démontage du bras porte-oculaire, un changement d'état entre l'état de blocage, l'état de réglage et l'état de démontage étant réalisé sans réglage.

2. Dispositif selon la revendication 1,
dans lequel la ceinture de maintien (32) comprend deux demi-colliers (36,38) ayant deux premières extrémités adjacentes articulées entre elles par un premier pivot (40) et deux secondes extrémités adjacentes reliées par lesdits moyens de blocage (42).

3. Dispositif selon la revendication 2,
dans lequel les moyens de blocage (42) comprennent deux leviers (44,46) dont chacun est articulé sur la seconde extrémité d'un demi-collier (36,38) correspondant par un deuxième pivot (50,52), et une biellette (48) articulée sur chacun des leviers (44,46) par un troisième pivot (54,56).

4. Dispositif selon la revendication 3,
dans lequel le deuxième pivot (50) et le troisième pivot (54) d'un premier (44) des leviers sont séparés par une première distance telle qu'un basculement du premier levier autour du deuxième pivot assure un passage de l'état de blocage à l'état de réglage, et le deuxième pivot (52) et le troisième pivot (56) du deuxième levier (46) sont séparés par une deuxième distance telle qu'un basculement du deuxième levier autour du deuxième pivot assure un passage de l'état de blocage à l'état de démontage, au moins lorsque le premier levier (44) est également basculé.

5. Dispositif selon la revendication 4,
dans lequel la deuxième distance est supérieure à la première.

6. Dispositif selon l'une quelconque des revendications 3 à 5, dans lequel ladite biellette (48) intégre des moyens de réglage de longueur (58).

7. Dispositif selon la revendication 6,
dans lequel les moyens de réglage de longueur comprennent un écrou (58) à double pas inversé, en prise sur deux tiges filetées articulés sur-les leviers (44,46) par les troisièmes pivots (54,56).
